# EUROPEAN PATENT SPECIFICATION

(11) **EP 3 067 181 B1**
(45) Date of publication and mention of the grant of the patent: **10.04.2019**
(21) Application number: 16158936.1
(22) Date of filing: 07.03.2016
(51) Int. Cl.: B29C 45/80, B29C 45/76, B29C 45/66

(54) **INJECTION MOLDING MACHINE AND METHOD FOR CONTROLLING INJECTION MOLDING MACHINE**
SPRITZGIESSMASCHINE UND VERFAHREN ZUM STEUERN EINER SPRITZGIESSMASCHINE
MACHINE DE MOULAGE PAR INJECTION ET PROCÉDÉ DE COMMANDE DE MACHINE DE MOULAGE PAR INJECTION

(30) Priority: 11.03.2015 JP 2015048689
(43) Date of publication of application: 14.09.2016
(73) Proprietor: SUMITOMO HEAVY INDUSTRIES, LTD., Tokyo 141-6025 (JP)
(72) Inventor: SHIBAYAMA, Tomohiko, Kanagawa, 237-8555 (JP); MIZUNO, Hiroyuki, Kanagawa, 237-8555 (JP)
(74) Representative: Louis Pöhlau Lohrentz

(56) References cited:
- EP-A1- 1 405 709
- CA-A1- 2 607 436
- DE-A1-102006 041 579
- DE-A1-102012 007 833
- JP-A- 2003 071 895
- JP-A- 2009 251 804
- US-A- 5 861 118
- US-A- 5 863 475
- US-A1- 2005 151 288
- US-A1- 2009 212 453

## Description

### BACKGROUND OF THE INVENTION

### Field of the Invention

The present invention relates to an injection molding machine and a method for controlling the injection molding machine.

### Description of Related Art

Injection molding machines have a mold clamping device that performs mold opening, mold clamping, and mold closing of a mold device, and a controller that controls the mold clamping device. The mold clamping device has a stationary platen having a stationary mold attached thereto, a movable platen having a movable mold attached thereto, a driving source that moves the movable platen, and a transmission mechanism that converts input from the driving source into output having a predetermined ratio and transmits the output to the movable platen (for example, refer to Japanese Unexamined Patent Application Publication No. 2002-337184).

A toggle mechanism or the like is used as the transmission mechanism. By moving the cross-head forward and backward, the plurality of links are bent and stretched, and the movable platen 13 is moved forward and backward. The ratio of the input and the output in the toggle mechanism varies according to the angle formed between the plurality of links, and varies according to the position of the cross-head. In addition, a crank mechanism can also be used instead of the toggle mechanism.

In the related art, the controller controls the driving source so that an actual value of the speed of the driving source reaches a set value. In a case where the speed of the driving source is constant, the speed of the cross-head is constant, but the speed of the movable platen varies. As a result, during the movement of the movable platen, the inertia force of the movable platen may become greater and a larger vibration may be caused.

US 2009/0212453 A1 discloses a method for controlling mold clamping device.

US 5,861,118 discloses a method and system for controlling injection molding apparatus.

CA 2 607 436 A1 discloses a mold actuator stroke control.

DE 10 2012 007 833 A1 discloses a process and control device for controlling of the opening and closing speed of the injection mold in an injection molding machine.

DE 10 2006 041 579 A1 discloses a process for controlling and/or regulating of an injection molding machine.

US 5, 863, 475 discloses a control method of an injection molding machine.

EP1 405 709 A1 discloses an injection molding machine with clamping force control.

JP 2009-251804 A discloses an acceleration/deceleration control method for machine movable part.

JP 2003-71895 A discloses a molding machine.

US 2005/0151288 A1 discloses a mold protection method for mold clamping apparatus.

### SUMMARY OF THE INVENTION

The invention has been made in view of the above problems, and a main object thereof is to provide an injection molding machine that reduces vibration caused by the movement of a movable platen.

In order to solve the above object, according to an aspect of the invention, there is provided an injection molding machine including a movable platen having a movable mold attached thereto; a driving source that moves the movable platen; a transmission mechanism that converts input from the driving source into an output having a predetermined ratio and transmits the output to the movable platen; and a controller that controls the driving source. The controller controls the driving source so that the movable platen moves at a predetermined acceleration in a preset acceleration pattern, wherein the acceleration pattern of the movable platen at the time of the mold closing is divided into at least six sections,
- wherein in the first mold closing section, an acceleration of the movable platen is increased over time from time t0 to time t1,
- wherein in the second mold closing section, the positive acceleration of the movable platen is maintained from the time t1 to time t2 and is maintained within an allowable range,
- wherein in the third mold closing section the acceleration of the movable platen is decreased over time and is changed from positive to negative,
- wherein in the fourth mold closing section, the negative acceleration of the movable platen is maintained from the time t3 to time t4 and is maintained within an allowable range,
- wherein in the fifth mold closing section, from the time t4 to time t5, and in the sixth mold closing section, from the time t5 to time t6, the acceleration of the movable platen 13 is increased over time and is brought close to zero over time, and
- wherein the inclination dA1/dt (>0) in the sixth mold closing section is smaller than the inclination dA1/dt (>0) in the fifth mold closing section.

According to another aspect of the invention, there is provided an injection molding machine including a movable platen having a movable mold attached thereto; a driving source that moves the movable platen; a transmission mechanism that converts input from the driving source into an output having a predetermined ratio and transmits the output to the movable platen; and a controller that controls the driving source. The controller controls the driving source so that the movable platen moves at a predetermined acceleration in a preset acceleration pattern, wherein the acceleration pattern of the movable platen at the time of the mold opening is divided into at least six sections,
- wherein in the first mold opening section, from time t7 to time t8, and in the second mold opening section, from the time t8 to time t9, the acceleration of the movable platen is increased over time,
- wherein the inclination dA1/dt (>0) in the second mold opening section is greater than the inclination dA1/dt (>0) in the first mold opening section,
- wherein in the third mold opening section, the positive acceleration of the movable platen is maintained from the time t9 to time t10 and is maintained within an allowable range,
- wherein in the fourth mold opening section, from the time t10 to time t11, the acceleration of the movable platen is decreased over time and is changed from positive to negative,
- wherein in the fifth mold opening section, the negative acceleration of the movable platen is maintained from the time t11 to time t12 and is maintained in an allowable range, and
- wherein in the sixth mold opening section, from the time t12 to time t13, the acceleration of the movable platen is increased over time and is brought close to zero over time.

According to the embodiment of the invention, the injection molding machine that reduces vibration caused by the movement of the movable platen is provided.

### BRIEF DESCRIPTION OF THE DRAWINGS

FIG. 1 is a view illustrating a state at the time of the completion of mold opening of an injection molding machine according to an embodiment of the invention.
FIG. 2 is a view illustrating a state at the time of the completion of mold closing of the injection molding machine according to an embodiment of the invention.
FIG. 3 is a view illustrating an acceleration pattern of a movable platen at the time of the mold closing according to the embodiment of the invention.
FIG. 4 is a view illustrating an acceleration pattern of the movable platen at the time of the mold opening according to the embodiment of the invention.

### DETAILED DESCRIPTION OF THE INVENTION

Although an embodiment for carrying out the invention will be described below with reference to the drawings, the same or corresponding components will be designated by the same or corresponding reference signs, and the description thereof will be omitted.

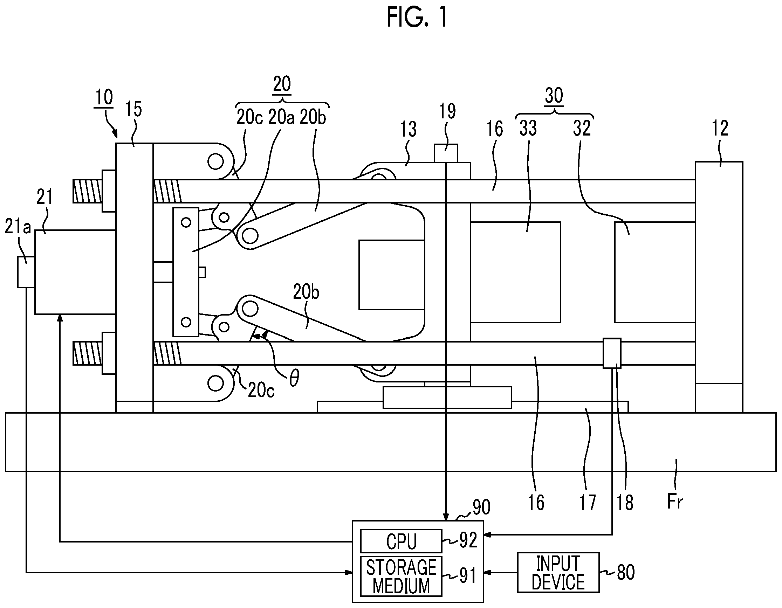

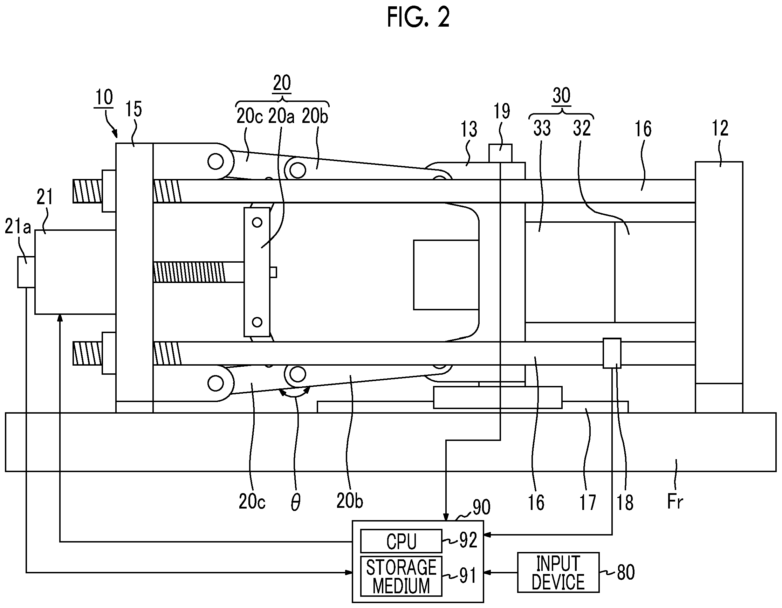

FIG. 1 is a view illustrating a state at the time of the completion of mold opening of an injection molding machine according to an embodiment of the invention. FIG. 2 is a view illustrating a state at the time of the completion of mold closing of the injection molding machine according to the embodiment of the invention. The injection molding machine has a frame Fr, a mold clamping device 10, a controller 90, and the like.

The mold clamping device 10 performs mold closing, mold clamping, and mold opening of a mold device 30. The mold clamping device 10 has a stationary platen 12, a movable platen 13, a rear platen 15, a tie-bar 16, a toggle mechanism 20, and a mold clamping motor 21. Hereinafter, a description will be made of a movement direction (rightward direction in FIGS. 1 and 2) of the movable platen 13 at the time of the mold closing being as the front and a movement direction (leftward direction in FIGS. 1 to 2) of the movable platen 13 at the time of the mold opening being as the rear.

The stationary platen 12 is fixed to the frame Fr. A stationary mold 32 is attached to the surface of the stationary platen 12 that faces the movable platen 13.

The movable platen 13 is made movable along a guide (for example, a guide rail) 17 laid on the frame Fr, and is made movable forward and backward with respect to the stationary platen 12. A movable mold 33 is attached to the surface of the movable platen 13 that faces the stationary platen 12.

Mold closing, mold clamping, and mold opening are performed by moving the movable platen 13 forward and backward with respect to the stationary platen 12. The stationary mold 32 and the movable mold 33 constitute the mold device 30.

The rear platen 15 is coupled to the stationary platen 12 at a distance therefrom, and is placed on the frame Fr so as to be movable in a mold opening/closing direction. In addition, the rear platen 15 may be made movable along a guide laid on the frame Fr. The guide of the rear platen 15 may be shared by the guide 17 of the movable platen 13.

In addition, in the present embodiment, the stationary platen 12 is fixed to the frame Fr and the rear platen 15 is made movable in the mold opening/closing direction with respect to the frame Fr. However, the rear platen 15 may be fixed to the frame Fr and the stationary platen 12 may be made movable in the mold opening/closing direction with respect to the frame Fr.

The tie-bar 16 couples the stationary platen 12 and the rear platen 15 with a space therebetween. A plurality of the tie-bars 16 may be used. Each tie-bar 16 is made parallel to the mold opening/closing direction, and is extended in response to a clamping force. At least one tie-bar 16 may be provided with a clamping force detector 18. The clamping force detector 18 may be of a strain gauge type, and may detect the strain of the tie-bar 16, thereby detecting a clamping force.

In addition, the clamping force detector 18 is not limited to the strain gauge type, and may be of a piezoelectric type, a capacitance type, a hydraulic type, an electromagnetic type, or the like, and the attachment position thereof is also not limited to the tie-bar 16.

The toggle mechanism 20 is disposed between the movable platen 13 and the rear platen 15. The toggle mechanism 20 is constituted of a cross-head 20a, a plurality of links 20b and 20c, and the like. One link 20b is rockably attached to the movable platen 13, and the other link 20c is rockably attached to the rear platen 15. The links 20b and 20c are bendably and stretchably coupled together by a pin or the like. By moving the cross-head 20a forward and backward, the plurality of links 20b and 20c are bent and stretched, and the movable platen 13 is moved forward and backward with respect to the rear platen 15.

The mold clamping motor 21 is attached to the rear platen 15, and the movable platen 13 is moved forward and backward by moving the cross-head 20a forward and backward. A motion conversion mechanism, which converts the rotational motion of the mold clamping motor 21 into a linear motion to transmit the converted linear motion to the cross-head 20a, is provided between the mold clamping motor 21 and the cross-head 20a. The motion conversion mechanism is constituted of, for example, a ball screw mechanism. The mold clamping motor 21 corresponds to a driving source set forth in the claims.

The operation of the mold clamping device 10 is controlled by a controller. The controller 90 has a storage medium 91, such as a memory, and a central processing unit (CPU) 92, and makes the CPU 92 execute a program stored in the storage medium 91, thereby controlling a mold closing step, a mold clamping step, a mold opening step, and the like.

In the mold closing step, the movable mold 33 is brought into contact with the stationary mold 32 by driving the mold clamping motor 21 to move the movable platen 13 forward.

In the mold clamping step, a clamping force is generating by further driving the mold clamping motor 21. A cavity space is formed between the movable mold 33 and the stationary mold 32 at the time of mold clamping, and the cavity space is filled with a liquid molding material. The molding material within the cavity space is hardened and becomes a molding product.

In the mold opening step, the movable mold 33 is separated from the stationary mold 32 by driving the mold clamping motor 21 to move the movable platen 13 backward.

Meanwhile, the toggle mechanism 20 changes input from the mold clamping motor 21 into output having a predetermined ratio, and transmits the output to the movable platen 13. The toggle mechanism 20 corresponds to a transmission mechanism set forth in the claims. The ratio of the input and the output in the toggle mechanism 20 varies according to the position of the cross-head 20a, and varies according to an angle θ formed between the plurality of links 20b and 20c.

Therefore, the controller 90 controls the mold clamping motor 21 so that the movable platen 13 moves at a predetermined acceleration. The inertia force of the movable platen 13 can be controlled and vibration caused by the movement of the movable platen 13 can be reduced.
(1) The acceleration pattern of the movable platen 13 may be preset or (2) the acceleration of the movable platen 13 may be monitored so that the movable platen 13 moves at a predetermined acceleration.

First, (1) a case where the acceleration pattern of the movable platen 13 is preset will be described. The acceleration pattern of the movable platen 13 may be set in consideration of an upper limit of the speed of the mold clamping motor 21.

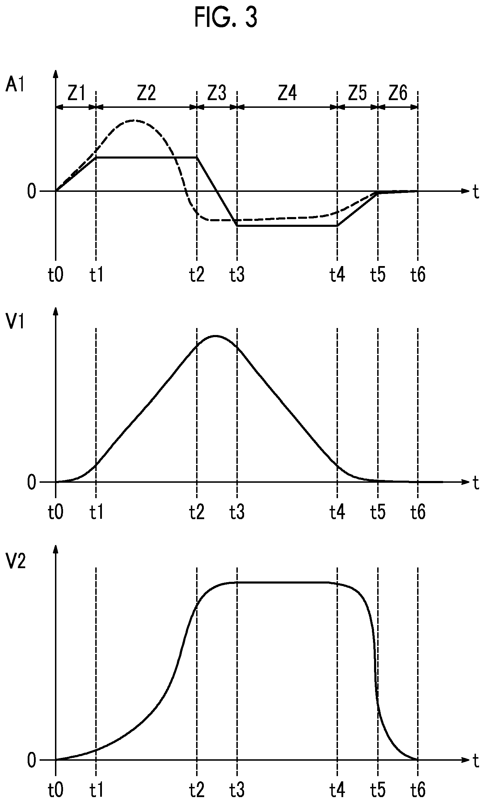

FIG. 3 is a view illustrating the acceleration pattern of the movable platen at the time of the mold closing according to the embodiment of the invention. In FIG. 3, a speed pattern of the movable platen and a speed pattern of the cross-head, which correspond to the acceleration pattern of the movable platen, are illustrated altogether. In FIG. 3, the vertical axis represents an acceleration A1 of the movable platen 13, a speed V1 of the movable platen 13, and a speed V2 of the cross-head 20a, and the horizontal axis represents time t. In addition, the time of the horizontal axis can also be replaced with a position. In FIG. 3, a dashed line represents the acceleration of the movable platen 13 according to a related-art control method. In the related-art control method, the mold clamping motor 21 is controlled so that the cross-head 20a moves, for example in a trapezoidal speed pattern.

Here, the speed V1 of the movable platen 13 means the speed of the movable platen 13 in a movement direction. The movement direction of the movable platen 13 at the time of the mold closing is a direction that faces the front side from the rear side. During the mold closing step, the speed V1 of the movable platen 13 is equal to or greater than zero. The same applies to the speed V2 of the cross-head 20a.

Additionally, the acceleration A1 of the movable platen 13 means the time differential of the speed V1 of the movable platen 13. The acceleration A1 of the movable platen 13 being positive means that the speed of the movable platen 13 in the movement direction is increasing. The positive acceleration is also referred to as positive acceleration. Meanwhile, the acceleration A1 of the movable platen 13 being negative means that the speed of the movable platen 13 in the movement direction is decreasing. The negative acceleration is also referred to as negative acceleration.

For example, as illustrated in FIG. 3, the acceleration pattern of the movable platen 13 at the time of the mold closing is divided into six sections including a first mold closing section Z1, a second mold closing section Z2, a third mold closing section Z3, a fourth mold closing section Z4, a fifth mold closing section Z5, and a sixth mold closing section Z6, and is set for every section. In addition, the number of sections is not limited to six.

In the first mold closing section Z1, the acceleration A1 of the movable platen 13 is increased over time from time t0 to time t1. Although the inclination dA1/dt (>0) of the acceleration is constant in FIG. 3, the inclination may not be constant. For example, at least one of the inclination dA1/dt (>0) at the start of the first mold closing section Z1 or the inclination dA1/dt (>0) at the end of the first mold closing section Z1 may be smaller than the inclination dA1/dt (>0) in the middle of the first mold closing section Z1.

In the second mold closing section Z2, the acceleration A1 of the movable platen 13 is maintained from the time t1 to time t2. The acceleration A1 in the second mold closing section Z2 is positive. Although the acceleration A1 in the second mold closing section Z2 is constant in FIG. 3, the acceleration just has to be maintained within an allowable range and may fluctuate slightly. By maintaining the acceleration A1 of the movable platen 13 in the second mold closing section Z2, the maximum value of the positive acceleration of the movable platen 13 can be limited, the inertia force of the movable platen 13 can be limited, and the vibration can be reduced.

In addition, in the second mold closing section Z2, an upper limit maybe provided for the positive acceleration of the movable platen 13 instead of maintaining the acceleration A1 of the movable platen 13. The maximum value of the positive acceleration of the movable platen 13 can be limited, the inertia force of the movable platen 13 can be limited, and the vibration can be reduced. The upper limit of the positive acceleration of the movable platen 13 may be set over all the sections at the time of the mold closing.

Additionally, in the second mold closing section Z2, both an upper limit and a lower limit may be provided for the positive acceleration of the movable platen13. The positive acceleration of the movable platen 13 is made equal to or smaller than the upper limit and equal to or greater than the lower limit. This lower limit is greater than zero. The lower limit of the positive acceleration of the movable platen 13 just has to be set in the second mold closing section Z2, and may not be set over all the sections at the time of the mold closing.

In the third mold closing section Z3, from the time t2 to time t3, the acceleration A1 of the movable platen 13 is decreased over time and is changed from positive to negative. Although the inclination dA1/dt (<0) of the acceleration is constant in FIG. 3, the inclination may not be constant. For example, at least one of the inclination dA1/dt (<0) at the start of the third mold closing section Z3 or the inclination dA1/dt (<0) at the end of the third mold closing section Z3 may be greater than the inclination dA1/dt (<0) in the middle of the third mold closing section Z3, that is, may be close to zero.

Items that can be set by a user in the mold closing step includes, for example, the time (from t1 to t2) of the second mold closing section Z2, the acceleration A1 of the movable platen 13 in the second mold closing section Z2, the time (from t0 to t1) of the first mold closing section Z1, the time (from t2 to t3) of the third mold closing section Z3, and the like. A user may set the inclination dA1/dt in the first mold closing section Z1 instead of the time (from t0 to t1) of the first mold closing section Z1. Additionally, a user may set the inclination dA1/dt in the third mold closing section Z3 instead of the time (from t2 to t3) of the third mold closing section Z3.

Although the user may input the set values of these items as numerical values, a plurality of acceleration patterns in which the set values of these items are different from each other may be prepared in advance, and a user may be made to be able to select an acceleration pattern to be actually used. For example, three types of acceleration patterns for a low vibration mode, a high-speed mode, and an intermediate mode may be prepared in advance. The positive acceleration of the movable platen 13 in the second mold closing section Z2 may be smaller in order of the high-speed mode, the intermediate mode, and the low vibration mode, and may be the smallest in the low vibration mode. The setting performed by a user is input to the controller 90 via the input device 80 that receives the input operation by a user. In addition, the number of acceleration patterns to be prepared in advance may not be limited to three, but two acceleration patterns may be used or four or more acceleration patterns may be used.

Additionally, the set values of these items may be automatically changed according to the weight of the movable mold 33. The inertia force of the movable mold 33 is obtained by the product of the weight of the movable mold 33 and the acceleration of the movable mold 33. Therefore, as the weight of the movable mold 33 becomes greater in order to suppress the vibration, the positive acceleration of the movable platen 13 in the second mold closing section Z2 is set to become smaller. The weight of the movable mold 33 is input to the controller 90 via the input device 80. The relationship between the weight of the movable mold 33 and the positive acceleration of the movable platen 13 in the second mold closing section Z2 is obtained in advance through testing or simulation, and is stored in the storage medium 91 in the form of formulas or tables. The controller 90 sets and changes the positive acceleration or the like of the movable platen 13 in the second mold closing section Z2, with reference to the data stored in the storage medium 91, in a case where the weight of the movable mold 33 is changed.

In the fourth mold closing section Z4, the acceleration A1 of the movable platen 13 is maintained from the time t3 to time t4. The acceleration A1 in the fourth mold closing section Z4 is negative. Although the acceleration A1 in the fourth mold closing section Z4 is constant in FIG. 3, the acceleration just has to be maintained within an allowable range and may fluctuate slightly. By maintaining the acceleration A1 of the movable platen 13 in the fourth mold closing section Z4, the minimum value of the negative acceleration of the movable platen 13 can be limited, the inertia force of the movable platen 13 can be limited, and the vibration can be reduced.

In addition, in the fourth mold closing section Z4, a lower limit maybe provided for the negative acceleration of the movable platen 13 instead of maintaining the acceleration A1 of the movable platen 13. The minimum value of the negative acceleration of the movable platen 13 can be limited, the inertia force of the movable platen 13 can be limited, and the vibration can be reduced. The lower limit of the negative acceleration of the movable platen 13 may be set over all the sections at the time of the mold closing.

Additionally, in the fourth mold closing section Z4, both an upper limit and a lower limit may be provided for the negative acceleration of the movable platen13. The negative acceleration of the movable platen 13 is made equal to or greater than the lower limit and equal to or smaller than the upper limit. This upper limit is smaller than zero. The upper limit of the negative acceleration of the movable platen 13 just has to be set in the fourth mold closing section Z4, and may not be set over all the sections at the time of the mold closing.

In the fifth mold closing section Z5, from the time t4 to time t5, the acceleration A1 of the movable platen 13 is increased over time and is brought close to zero over time. Although the inclination dA1/dt (>0) of the acceleration is constant in FIG. 3, the inclination may not be constant. For example, at least one of the inclination dA1/dt (>0) at the start of the fifth mold closing section Z5 or the inclination dA1/dt (>0) at the end of the fifth mold closing section Z5 may be smaller than the inclination dA1/dt (>0) in the middle of the fifthmold closing section Z5.

In the sixth mold closing section Z6, from the time t5 to time t6, the acceleration A1 of the movable platen 13 is increased over time and is brought close to zero over time. Although the inclination dA1/dt (>0) of the acceleration is constant in FIG. 3, the inclination may not be constant. For example, the inclination dA1/dt (>0) at the end of the sixth mold closing section Z6 may be smaller than the inclination dA1/dt (>0) in the middle of the sixth mold closing section Z6.

The inclination dA1/dt (>0) in the sixth mold closing section Z6 may be smaller than the inclination dA1/dt (>0) in the fifth mold closing section Z5.

Mold clamping is performed after the sixth mold closing section Z6.

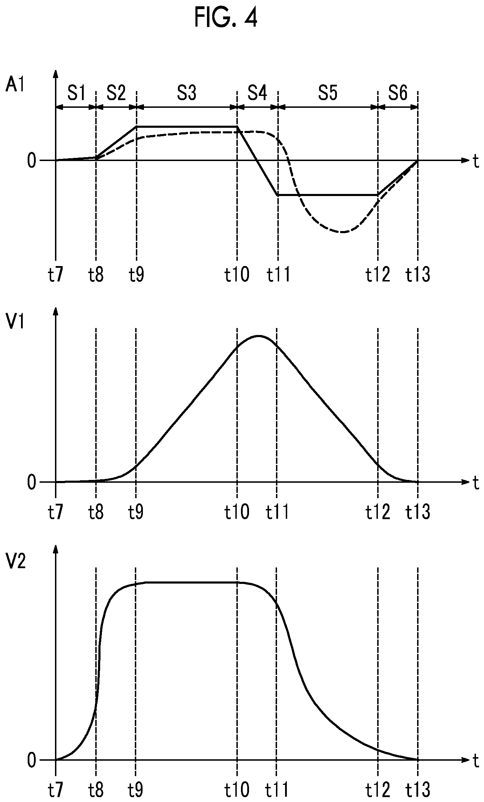

FIG. 4 is a view illustrating an acceleration pattern of the movable platen at the time of the mold opening according to the embodiment of the invention. In FIG. 4, a speed pattern of the movable platen 13 and a speed pattern of the cross-head 20a, which correspond to the acceleration pattern of the movable platen 13, are illustrated altogether. The vertical axis represents the acceleration A1 of the movable platen 13, the speed V1 of the movable platen 13, and the speed V2 of the cross-head 20a, and the horizontal axis represents the time t. In addition, the time of the horizontal axis can also be replaced with a position. In FIG. 4, a dashed line represents the acceleration of the movable platen 13 according to a related-art control method. In the related-art control method, the mold clamping motor 21 is controlled so that the cross-head 20a moves, for example in a trapezoidal speed pattern.

Here, the speed V1 of the movable platen 13 means the speed of the movable platen 13 in a movement direction. The movement direction of the movable platen 13 at the time of the mold opening is a direction that faces the front side from the rear side. During the mold opening step, the speed V1 of the movable platen 13 is equal to or greater than zero. The same applies to the speed V2 of the cross-head 20a.

Additionally, the acceleration A1 of the movable platen 13 means the time differential of the speed V1 of the movable platen 13. The acceleration A1 of the movable platen 13 being positive means that the speed of the movable platen 13 in the movement direction is increasing. The positive acceleration is also referred to as positive acceleration. Meanwhile, the acceleration A1 of the movable platen 13 being negative means that the speed of the movable platen 13 in the movement direction is decreasing. The negative acceleration is also referred to as negative acceleration.

The acceleration pattern of the movable platen 13 at the time of the mold opening illustrated in FIG. 4 corresponds to the acceleration pattern of the movable platen 13 at the time of the mold closing illustrated in FIG. 3. For example, as illustrated in FIG. 4, the acceleration pattern of the movable platen 13 at the time of the mold opening is divided into six sections including a first mold opening section S1, a second mold opening section S2, a third mold opening section S3, a fourth mold opening section S4, a fifth mold opening section S5, and a sixth mold opening section S6, and is set for every section. In addition, the number of sections is not limited to six.

In the first mold opening section S1, the acceleration A1 of the movable platen 13 is increased over time from time t7 to time t8. Although the inclination dA1/dt (>0) of the acceleration is constant in FIG. 4, the inclination may not be constant. For example, the inclination dA1/dt (>0) at the start of the first mold opening section S1 may be smaller than the inclination dA1/dt (>0) in the middle of the first mold opening section S1.

In the second mold opening section S2, the acceleration A1 of the movable platen 13 is increased over time from the time t8 to time t9. Although the inclination dA1/dt (>0) of the acceleration is constant in FIG. 4, the inclination may not be constant. For example, at least one of the inclination dA1/dt (>0) at the start of the second mold opening section S2 or the inclination dA1/dt (>0) at the end of the second mold opening section S2 may be smaller than the inclination dA1/dt (>0) in the middle of the second mold opening section S2.

The inclination dA1/dt (>0) in the second mold opening section S2 may be greater than the inclination dA1/dt (>0) in the first mold opening section S1.

In the third mold opening section S3, the acceleration A1 of the movable platen 13 is maintained from the time t9 to time t10. The acceleration A1 in the third mold opening section S3 is positive. Although the acceleration A1 in the third mold opening section S3 is constant in FIG. 4, the acceleration just has to be maintained within an allowable range and may fluctuate slightly. By maintaining the acceleration A1 of the movable platen 13 in the third mold opening section S3, the maximum value of the positive acceleration of the movable platen 13 can be limited, the inertia force of the movable platen 13 can be limited, and the vibration can be reduced.

In addition, in the third mold opening section S3, an upper limit maybe provided for the positive acceleration of the movable platen 13 instead of maintaining the acceleration A1 of the movable platen 13. The maximum value of the positive acceleration of the movable platen 13 can be limited, the inertia force of the movable platen 13 can be limited, and the vibration can be reduced. The upper limit of the positive acceleration of the movable platen 13 may be set over all the sections at the time of the mold opening.

Additionally, in the third mold opening section S3, both an upper limit and a lower limit may be provided for the positive acceleration of the movable platen13. The positive acceleration of the movable platen 13 is made equal to or smaller than the upper limit and equal to or greater than the lower limit. This lower limit is greater than zero. The lower limit of the positive acceleration of the movable platen 13 just has to be set in the third mold opening section S3, and may not be set over all the sections at the time of the mold opening.

In the fourth mold opening section S4, from the time t10 to time t11, the acceleration A1 of the movable platen 13 is decreased over time and is changed from positive to negative. Although the inclination dA1/dt (<0) of the acceleration is constant in FIG. 4, the inclination may not be constant. For example, at least one of the inclination dA1/dt (<0) at the start of the fourth mold opening section S4 or the inclination dA1/dt (<0) at the end of the fourth mold opening section S4 may be greater than the inclination dA1/dt (<0) in the middle of the fourth mold opening section S4, that is, may be close to zero.

In the fifth mold opening section S5, the acceleration A1 of the movable platen 13 is maintained from the time t11 to time t12. The acceleration A1 in the fifth mold opening section S5 is negative. Although the acceleration A1 in the fifth mold opening section S5 is constant in FIG. 4, the acceleration just has to be maintained within an allowable range and may fluctuate slightly. By maintaining the acceleration A1 of the movable platen 13 in the fifth mold opening section S5, the minimum value of the negative acceleration of the movable platen 13 can be limited, the inertia force of the movable platen 13 can be limited, and the vibration can be reduced.

In addition, in the fifth mold opening section S5, a lower limit maybe provided for the negative acceleration of the movable platen 13 instead of maintaining the acceleration A1 of the movable platen 13. The minimum value of the negative acceleration of the movable platen 13 can be limited, the inertia force of the movable platen 13 can be limited, and the vibration can be reduced. The lower limit of the negative acceleration of the movable platen 13 may be set over all the sections at the time of the mold opening.

Additionally, in the fifth mold opening section S5, both an upper limit and a lower limit may be provided for the negative acceleration of the movable platen 13. The negative acceleration of the movable platen 13 is made equal to or greater than the lower limit and equal to or smaller than the upper limit. This upper limit is smaller than zero. The upper limit of the negative acceleration of the movable platen 13 just has to be set in the fifth mold opening section S5, and may not be set over all the sections at the time of the mold opening.

In the sixth mold opening section S6, from the time t12 to time t13, the acceleration A1 of the movable platen 13 is increased over time and is brought close to zero over time. Although the inclination dA1/dt (>0) of the acceleration is constant in FIG. 4, the inclination may not be constant. For example, at least one of the inclination dA1/dt (>0) at the start of the sixth mold opening section S6 or the inclination dA1/dt (>0) at the end of the sixth mold opening section S6 may be smaller than the inclination dA1/dt (>0) in the middle of the sixth mold opening section S6.

Items that can be set by a user in the mold opening step includes, for example, the time (from t11 to t12) of the fifth mold opening section S5, the acceleration A1 of the movable platen in the fifth mold opening section S5, the time (from t10 to t11) of the fourth mold opening section S4, the time (from t12 to t13) of the sixth mold opening section S6, and the like. A user may set the inclination dA1/dt in the fourth mold opening section S4 instead of the time (from t10 to t11) of the fourth mold opening section S4. Additionally, a user may set the inclination dA1/dt in the sixth mold opening section S6 instead of the time (from t12 to t13) of the sixth mold opening section S6.

Although the user may input the set values of these items as numerical values, a plurality of acceleration patterns in which the set values of these items are different from each other may be prepared in advance, and a user may be made to be able to select an acceleration pattern to be actually used. For example, three types of acceleration patterns for a low vibration mode, a high-speed mode, and an intermediate mode may be prepared in advance. The negative acceleration of the movable platen 13 in the fifth mold opening section S5 may be greater in order of the high-speed mode, the intermediate mode, the low vibration mode, and may be the greatest in the low vibration mode (closest to zero). The setting performed by a user is input to the controller 90 via the input device 80. In addition, the number of acceleration patterns to be prepared in advance may not be limited to three, but two acceleration patterns may be used or four or more acceleration patterns may be used.

Additionally, the set values of these items may be automatically changed according to the weight of the movable mold 33. The inertia force of the movable mold 33 is obtained by the product of the weight of the movable mold 33 and the acceleration of the movable mold 33. Therefore, as the weight of the movable mold 33 becomes greater in order to suppress the vibration, the negative acceleration of the movable platen 13 in the fifth mold opening section S5 is set to become greater (close to zero) . The weight of the movable mold 33 is input to the controller 90 via the input device 80. The relationship between the weight of the movable mold 33 and the negative acceleration of the movable platen 13 in the fifth mold opening section S5 is obtained in advance through testing or simulation, and is stored in the storage medium 91 in the form of formulas or tables. The controller 90 sets and changes the negative acceleration or the like of the movable platen 13 in the fifth mold opening section S5, with reference to the data stored in the storage medium 91, in a case where the weight of the movable mold 33 is changed.

The controller 90 may control the mold clamping motor 21 so that the movable platen 13 moves, for example, in the acceleration pattern of the movable platen 13 illustrated in FIG. 3 or 4.

For example, the controller 90 may control the mold clamping motor 21, on the basis of an actual value and a set value of the speed of the mold clamping motor 21. For example, the controller 90 feedback-controls the mold clamping motor 21 so that the actual value of the speed of the mold clamping motor 21 reaches the set value. Feedforward control may be performed instead of the feedback control. The speed pattern of the mold clamping motor 21 corresponds to the acceleration pattern of the movable platen 13, and is obtained by realizing the acceleration pattern. The actual value of the speed of the mold clamping motor 21 is detected, for example, using an encoder 21a that detects the number of rotations of the mold clamping motor 21. The mold clamping motor 21 is provided with the encoder 21a. Since the number of rotations of the mold clamping motor 21 is proportional to the speed V2 of the cross-head 20a, the speed of the mold clamping motor 21 may be expressed by the speed V2 of the cross-head 20a.

In addition, the actual value of the speed of the mold clamping motor 21 may be detected using a speed sensor. This speed sensor detects the speed of the cross-head 20a or a member that moves integrally with the cross-head 20a.

The controller 90 may receive an acceleration pattern of the movable platen 13 from the outside and may create a speed pattern of the mold clamping motor 21 corresponding to the acceleration pattern of the movable platen 13, or may receive an already-created speed pattern of the mold clamping motor 21 from the outside. The controller 90 may be connected to the outside in either a wireless manner or a wired manner. The controller 90 may download various kinds of data through an Internet connection, or may receive various kinds of data from an input device 80 that receives a user's input operation. As the input device 80, for example, a touch panel in which an input unit and a display unit are integrated with each other is used. The input unit receives a user's input operation and the display unit displays a screen according to the input operation.

The speed pattern of the mold clamping motor 21 is made, for example, by integrating the acceleration pattern of the movable platen 13 to calculate the speed pattern of the movable platen 13, and converting the speed pattern of the movable platen 13 into the speed pattern of the cross-head 20a. A formula or the like showing the relationship between the speed of the cross-head 20a and the speed of the movable platen 13 is used for this conversion, and this formula is used in advance through testing or simulation, and is used by reading the formula stored in the storage medium 91. The relationship between the speed of the cross-head 20a and the speed of the movable platen 13 is determined from the properties or the like of the toggle mechanism 20. The properties of the toggle mechanism 20 include, for example, the length or the like of the links 20b and 20c.

Additionally, the controller 90 may control the mold clamping motor 21, on the basis of an actual value and a set value of the acceleration of the movable platen 13. For example, the controller 90 feedback-controls the mold clamping motor 21 so that the actual value of the acceleration of the movable platen 13 reaches the set value. Feedforward control may be performed instead of the feedback control. The actual value of the acceleration of the movable platen 13 can be detected by an accelerometer 19. Although the accelerometer 19 is attached to the movable platen 13 as illustrated in FIG. 1 or 2, the accelerometer may be attached to a member (for example, the movable mold 33) that moves integrally with the movable platen 13. As the set value of the acceleration of the movable platen 13, for example, the acceleration pattern of the movable platen 13 illustrated in FIG. 3 or 4 is used.

Moreover, the controller 90 may set the speed of the mold clamping motor 21 so that the actual value of the acceleration of the movable platen 13 reaches the set value and may control the mold clamping motor 21 so that the actual value reaches the set value. The speed V2 of the cross-head 20a may be expressed by the speed of the mold clamping motor 21.

Next, (2) a case where the acceleration of the movable platen 13 is monitored will be described. In this case, the controller 90 monitors the acceleration of the movable platen 13, using the accelerometer 19, and controls the mold clamping motor 21 on the basis of a monitoring result. For example, the controller 90 controls the mold clamping motor 21 so that the actual value of the positive acceleration of the movable platen 13 does not exceed the upper limit (>0). Additionally, the controller 90 controls the mold clamping motor 21 so that the actual value of the negative acceleration of the movable platen 13 does not falls below the lower limit (<0) . Accordingly, the inertia force of the movable platen 13 can be limited, and the vibration can be reduced.

Although the embodiment of the injection molding machine has been described above, the invention is not limited to the above-described embodiment, and various alterations and improvements can be made within the scope of the invention described in the claims.

For example, the injection molding machine of the above embodiment may be of a horizontal type in which the mold opening/closing direction is the horizontal direction, the injection molding machine may be of a vertical type in which the mold opening/closing direction is the vertical direction. The vertical type mold clamping device has a lower platen as the stationary platen, an upper platen as the movable platen, a toggle support, the toggle mechanism, the tie-bar, and the like. A lower mold is attached to the lower platen, and an upper mold is attached to the upper platen. The lower mold and the upper mold constitute a mold device. The lower mold may be attached to the lower platen via a rotary table. The toggle support is disposed below the lower platen and moves upward and downward together with the upper platen. The toggle mechanism is disposed between the toggle support and the lower platen. The tie-bar is made parallel to the vertical direction, passes through the lower platen, and couples the upper platen and the toggle support.

Additionally, in the above embodiment, the toggle mechanism is used as a transmission mechanism. However, a crank mechanism may be used.

## Claims

1. An injection molding machine comprising:
a movable platen (13) having a movable mold (33) attached thereto;
a driving source (21) that moves the movable platen (13) ;
a transmission mechanism (20) that converts input from the driving source (21) into output having a predetermined ratio and transmits the output to the movable platen (13); and
a controller (90) that is configured to control the driving source (21),
wherein the controller (90) is configured to control the driving source (21) so that the movable platen (13) moves at a predetermined acceleration in a preset acceleration pattern, wherein the acceleration pattern of the movable platen (13) at the time of the mold closing is divided into at least six sections,
- wherein in the first mold closing section (Z1), an acceleration of the movable platen (13) is increased over time from time (t0) to time (t1),
- wherein in the second mold closing section (Z2), the positive acceleration of the movable platen (13) is maintained from the time (t1) to time (t2) and is maintained within an allowable range,
- wherein in the third mold closing section (Z3) the acceleration of the movable platen (13) is decreased over time and is changed from positive to negative,
- wherein in the fourth mold closing section (Z4), the negative acceleration of the movable platen (13) is maintained from the time (t3) to time (t4) and is maintained within an allowable range,
- wherein in the fifth mold closing section (Z5), from the time (t4) to time (t5), and in the sixth mold closing section (Z6), from the time (t5) to time (t6), the acceleration of the movable platen (13) is increased over time and is brought close to zero over time, and
- wherein the inclination dA1/dt (>0) in the sixth mold closing section (Z6) is smaller than the inclination dA1/dt (>0) in the fifth mold closing section (Z5).

2. An injection molding machine comprising:
a movable platen (13) having a movable mold (33) attached thereto;
a driving source (21) that moves the movable platen (13) ;
a transmission mechanism (20) that converts input from the driving source (21) into output having a predetermined ratio and transmits the output to the movable platen (13); and
a controller (90) that is configured to control the driving source (21),
wherein the controller (90) is configured to control the driving source (21) so that the movable platen (13) moves at a predetermined acceleration in a preset acceleration pattern, wherein the acceleration pattern of the movable platen (13) at the time of the mold opening is divided into at least six sections,
- wherein in the first mold opening section (S1), from time (t7) to time (t8), and in the second mold opening section (S2), from the time (t8) to time (t9), the acceleration of the movable platen (13) is increased over time,
- wherein the inclination dA1/dt (>0) in the second mold opening section (S2) is greater than the inclination dA1/dt (>0) in the first mold opening section (S1),
- wherein in the third mold opening section (S3), the positive acceleration of the movable platen (13) is maintained from the time (t9) to time (t10) and is maintained within an allowable range,
- wherein in the fourth mold opening section (S4), from the time (t10) to time (t11), the acceleration of the movable platen (13) is decreased over time and is changed from positive to negative,
- wherein in the fifth mold opening section (S5), the negative acceleration of the movable platen (13) is maintained from the time (t11) to time (t12) and is maintained in an allowable range, and
- wherein in the sixth mold opening section (S6), from the time (t12) to time (t13), the acceleration of the movable platen (13) is increased over time and is brought close to zero over time.

3. The injection molding machine according to Claim 1 or 2,
wherein a section where an upper limit and/or a lower limit of the positive acceleration of the movable platen (13) is set is provided in the acceleration pattern.

4. The injection molding machine according to any one of Claims1 to 3,
wherein a section where a lower limit and/or an upper limit of the negative acceleration of the movable platen (13) is set is provided in the acceleration pattern.

5. The injection molding machine according to any one of Claims 1 to 4,
wherein the controller (90) is configured to control the driving source (21) on the basis of an actual value and a set value of the speed of the driving source (21), and
wherein a speed pattern of the preset driving source (21) corresponds to the acceleration pattern of the movable platen (13) .

6. The injection molding machine according to Claim 5,
wherein the controller (90) is configured to receive the acceleration pattern of the movable platen (13) from the outside, and is configured to create the speed pattern of the driving source (21) corresponding to the acceleration pattern of the movable platen (13).

7. The injection molding machine according to Claim 5,
wherein the controller (90) is configured to receive the speed pattern of the driving source (21) corresponding to the acceleration pattern of the movable platen (13) from the outside.

8. The injection molding machine according to any one of Claims 1 to 7, further comprising:
an accelerometer (19) that is configured to detect the actual value of the acceleration of the movable platen (13),
wherein the controller (90) is configured to control the driving source (21) on the basis of the actual value and the set value of acceleration of the movable platen (13).

9. The injection molding machine according to any one of Claims 1 to 8, further comprising:
an input device that receives a user's input operation,
wherein the controller (90) is configured to select an acceleration pattern according to the input operation in the input device from a plurality of preset acceleration patterns, and is configured to control the driving source so that the movable platen (13) moves in the selected acceleration pattern.

10. The injection molding machine according to Claim 9, wherein three types of preset acceleration patterns for a low vibration mode, a high-speed mode, and an intermediate mode are prepared in advance.

11. The injection molding machine according to any one of Claims 1 to 10, further comprising:
an accelerometer (19) that is configured to detect the actual value of the acceleration of the movable platen (13),
wherein the controller (90) is configured to control the driving source (21) so that an actual value of the positive acceleration of the movable platen (13) does not exceed an upper limit and/or an actual value of the negative acceleration of the movable platen (13) does not fall below a lower limit.

12. A method for controlling an injection molding machine comprising:
a movable platen (13) having a movable mold (33) attached thereto;
a driving source (21) that moves the movable platen (13) ;
a transmission mechanism (20) that converts input from the driving source (21) into an output having a predetermined ratio and transmits the output to the movable platen (13); and
a controller (90) that controls the driving source (21),
wherein the driving source (21) is controlled so that the movable platen (13) moves at a predetermined acceleration in a preset acceleration pattern, wherein the acceleration pattern of the movable platen (13) is divided into six sections,
- wherein in the first section (Z1), an acceleration of the movable platen (13) is increased over time from time (t0) to time (t1),
- wherein in the second section (Z2), the positive acceleration of the movable platen (13) is maintained from the time (t1) to time (t2) and is maintained within an allowable range,
- wherein in the third section (Z3) the acceleration A1 of the movable platen (13) is decreased over time and is changed from positive to negative,
- wherein in the fourth section (Z4), the negative acceleration of the movable platen (13) is maintained from the time (t3) to time (t4) and is maintained within an allowable range,
- wherein in the fifth section (Z5), from the time (t4) to time (t5), and in the sixth section (Z6), from the time (t5) to time (t6), the acceleration of the movable platen (13) is increased over time and is brought close to zero over time, and
- wherein the inclination dA1/dt (>0) in the sixth mold closing section (Z6) is smaller than the inclination dA1/dt (>0) in the fifth mold closing section (Z5).

13. A method for controlling an injection molding machine comprising:
a movable platen (13) having a movable mold (33) attached thereto;
a driving source (21) that moves the movable platen (13) ;
a transmission mechanism (20) that converts input from the driving source (21) into an output having a predetermined ratio and transmits the output to the movable platen (13); and
a controller (90) that controls the driving source (21),
wherein the driving source (21) is controlled so that the movable platen (13) moves at a predetermined acceleration in a preset acceleration pattern, wherein the acceleration pattern of the movable platen (13) at the time of the mold opening is divided into at least six sections,
- wherein in the first mold opening section (S1), from time (t7) to time (t8), and in the second mold opening section (S2), from the time (t8) to time (t9), the acceleration of the movable platen (13) is increased over time,
- wherein the inclination dA1/dt (>0) in the second mold opening section (S2) is greater than the inclination dA1/dt (>0) in the first mold opening section (S1),
- wherein in the third mold opening section (S3), the positive acceleration of the movable platen (13) is maintained from the time (t9) to time (t10) and is maintained within an allowable range,
- wherein in the fourth mold opening section (S4), from the time (t10) to time (t11), the acceleration of the movable platen (13) is decreased over time and is changed from positive to negative,
- wherein in the fifth mold opening section (S5), the negative acceleration of the movable platen (13) is maintained from the time (t11) to time (t12) and is maintained in an allowable range, and
- wherein in the sixth mold opening section (S6), from the time (t12) to time (t13), the acceleration of the movable platen (13) is increased over time and is brought close to zero over time.

14. The method for controlling the injection molding machine according to Claim 12 or 13,
wherein an acceleration pattern of the movable platen (13) is set, and the driving source (21) is controlled on the basis of the set acceleration pattern.

15. The method for controlling the injection molding machine according to Claim 12 to 14,
wherein the acceleration of the movable platen (13) is monitored, and the driving source (21) is controlled on the basis of a monitoring result.

## Patentansprüche

1. Spritzgießmaschine umfassend:
einen beweglichen Formträger (13), der eine daran befestigte bewegliche Form (33) aufweist;
eine Antriebsquelle (21), die den beweglichen Formträger (13) bewegt;
einen Übersetzungsmechanismus (20), der einen Eingang von der Antriebsquelle (21) in einen ein vorgegebenes Verhältnis besitzenden Ausgang umsetzt und den Ausgang zum beweglichen Formträger (13) überträgt; und
eine Steuereinrichtung (90), die konfiguriert ist, die Antriebsquelle (21) zu steuern,
wobei die Steuereinrichtung (90) konfiguriert ist, die Antriebsquelle (21) so zu steuern, dass sich der bewegliche Formträger (13) mit einer vorgegebenen Beschleunigung in einem voreingestellten Beschleunigungsmuster bewegt, wobei das Beschleunigungsmuster des beweglichen Formträgers (13) zum Zeitpunkt des Schließens der Form in mindestens sechs Abschnitte unterteilt ist,
- wobei im ersten Abschnitt (Z1) des Schließens der Form eine Beschleunigung des beweglichen Formträgers (13) von Zeitpunkt (t0) bis Zeitpunkt (t1) mit der Zeit erhöht wird,
- wobei im zweiten Abschnitt (Z2) des Schließens der Form die positive Beschleunigung des beweglichen Formträgers (13) vom Zeitpunkt (t1) bis zum Zeitpunkt (t2) aufrechterhalten wird und innerhalb eines zulässigen Bereichs aufrechterhalten wird,
- wobei im dritten Abschnitt (Z3) des Schließens der Form die Beschleunigung des beweglichen Formträgers (13) mit der Zeit abgesenkt wird und von positiv auf negativ geändert wird,
- wobei im vierten Abschnitt (Z4) des Schließens der Form die negative Beschleunigung des beweglichen Formträgers (13) vom Zeitpunkt (t3) bis zum Zeitpunkt (t4) aufrechterhalten wird und innerhalb eines zulässigen Bereichs aufrechterhalten wird,
- wobei im fünften Abschnitt (Z5) des Schließens der Form vom Zeitpunkt (t4) bis zum Zeitpunkt (t5) und im sechsten Abschnitt (Z6) des Schließens der Form vom Zeitpunkt (t5) bis zum Zeitpunkt (t6) die Beschleunigung des beweglichen Formträgers (13) mit der Zeit erhöht wird und mit der Zeit nahe null gebracht wird, und
- wobei die Steigung dA1/dt (> 0) im sechsten Abschnitt (Z6) des Schließens der Form kleiner als die Steigung dA1/dt (> 0) im fünften Abschnitt (Z5) des Schließens der Form ist.

2. Spritzgießmaschine umfassend:
einen beweglichen Formträger (13), der eine daran befestigte bewegliche Form (33) aufweist;
eine Antriebsquelle (21), die den beweglichen Formträger (13) bewegt;
einen Übersetzungsmechanismus (20), der einen Eingang von der Antriebsquelle (21) in einen ein vorgegebenes Verhältnis besitzenden Ausgang umsetzt und den Ausgang zum beweglichen Formträger (13) überträgt; und
eine Steuereinrichtung (90), die konfiguriert ist, die Antriebsquelle (21) zu steuern,
wobei die Steuereinrichtung (90) konfiguriert ist, die Antriebsquelle (21) so zu steuern, dass sich der bewegliche Formträger (13) mit einer vorgegebenen Beschleunigung in einem voreingestellten Beschleunigungsmuster bewegt, wobei das Beschleunigungsmuster des beweglichen Formträgers (13) zum Zeitpunkt des Öffnens der Form in mindestens sechs Abschnitte unterteilt ist,
- wobei im ersten Abschnitt (S1) des Öffnens der Form von Zeitpunkt (t7) bis Zeitpunkt (t8) und im zweiten Abschnitt (S2) des Öffnens der Form vom Zeitpunkt (t8) bis zum Zeitpunkt (t9) die Beschleunigung des beweglichen Formträgers (13) mit der Zeit erhöht wird,
- wobei die Steigung dA1/dt (> 0) im zweiten Abschnitt (S2) des Öffnens der Form größer als die Steigung dA1/dt (> 0) im ersten Abschnitt (S1) des Öffnens der Form ist,
- wobei im dritten Abschnitt (S3) des Öffnens der Form die positive Beschleunigung des beweglichen Formträgers (13) vom Zeitpunkt (t9) bis zum Zeitpunkt (t10) aufrechterhalten wird und innerhalb eines zulässigen Bereichs aufrechterhalten wird,
- wobei im vierten Abschnitt (S4) des Öffnens der Form die Beschleunigung des beweglichen Formträgers (13) vom Zeitpunkt (t10) bis zum Zeitpunkt (tl 1) mit der Zeit abgesenkt wird und von positiv auf negativ geändert wird,
- wobei im fünften Abschnitt (S5) des Öffnens der Form die negative Beschleunigung des beweglichen Formträgers (13) vom Zeitpunkt (t11) bis zum Zeitpunkt (t12) aufrechterhalten wird und in einem zulässigen Bereich aufrechterhalten wird, und
- wobei im sechsten Abschnitt (S6) des Öffnens der Form die Beschleunigung des beweglichen Formträgers (13) vom Zeitpunkt (t12) bis zum Zeitpunkt (t13) mit der Zeit erhöht wird und mit der Zeit nahe null gebracht wird.

3. Spritzgießmaschine nach Anspruch 1 oder 2,
wobei ein Abschnitt, in dem ein oberer Grenzwert und/oder ein unterer Grenzwert der positiven Beschleunigung des beweglichen Formträgers (13) eingestellt ist, in dem Beschleunigungsmuster vorgesehen ist.

4. Spritzgießmaschine nach einem der Ansprüche 1 bis 3,
wobei ein Abschnitt, in dem ein unterer Grenzwert und/oder ein oberer Grenzwert der negativen Beschleunigung des beweglichen Formträgers (13) eingestellt ist, in dem Beschleunigungsmuster vorgesehen ist.

5. Spritzgießmaschine nach einem der Ansprüche 1 bis 4,
wobei die Steuereinrichtung (90) konfiguriert ist, die Antriebsquelle (21) auf der Grundlage eines tatsächlichen Wertes und eines eingestellten Wertes der Geschwindigkeit der Antriebsquelle (21) zu steuern, und
wobei ein Geschwindigkeitsmuster der voreingestellten Antriebsquelle (21) dem Beschleunigungsmuster des beweglichen Formträgers (13) entspricht.

6. Spritzgießmaschine nach Anspruch 5,
wobei die Steuereinrichtung (90) konfiguriert ist, das Beschleunigungsmuster des beweglichen Formträgers (13) von außen zu empfangen und konfiguriert ist, das Geschwindigkeitsmuster der Antriebsquelle (21) zu erzeugen, das dem Beschleunigungsmuster des beweglichen Formträgers (13) entspricht.

7. Spritzgießmaschine nach Anspruch 5,
wobei die Steuereinrichtung (90) konfiguriert ist, das Geschwindigkeitsmuster der Antriebsquelle (21), das dem Beschleunigungsmuster des beweglichen Formträgers (13) entspricht, von außen zu empfangen.

8. Spritzgießmaschine nach einem der Ansprüche 1 bis 7 umfassend:
eine Beschleunigungsmesseinrichtung (19), die konfiguriert ist, den tatsächlichen Wert der Beschleunigung des beweglichen Formträgers (13) zu detektieren,
wobei die Steuereinrichtung (90) konfiguriert ist, die Antriebsquelle (21) auf der Grundlage des tatsächlichen Wertes und des eingestellten Wertes der Beschleunigung des beweglichen Formträgers (13) zu steuern.

9. Spritzgießmaschine nach einem der Ansprüche 1 bis 8 ferner umfassend:
eine Eingabevorrichtung, die einen Eingabevorgang eines Anwenders empfängt,
wobei die Steuereinrichtung (90) konfiguriert ist, ein Beschleunigungsmuster gemäß dem Eingabevorgang in der Eingabevorrichtung aus einer Vielzahl von voreingestellten Beschleunigungsmustern auszuwählen, und konfiguriert ist, die Antriebsquelle so zu steuern, dass sich der bewegliche Formträger (13) in dem ausgewählten Beschleunigungsmuster bewegt.

10. Spritzgießmaschine nach Anspruch 9, wobei drei Arten von voreingestellten Beschleunigungsmustern für einen Modus mit geringer Schwingung, einen Hochgeschwindigkeitsmodus und einen Zwischenmodus vorab aufbereitet werden.

11. Spritzgießmaschine nach einem der Ansprüche 1 bis 10 ferner umfassend:
eine Beschleunigungsmesseinrichtung (19), die konfiguriert ist, den tatsächlichen Wert der Beschleunigung des beweglichen Formträgers (13) zu detektieren,
wobei die Steuereinrichtung (90) konfiguriert ist, die Antriebsquelle (21) so zu steuern, dass ein tatsächlicher Wert der positiven Beschleunigung des beweglichen Formträgers (13) einen oberen Grenzwert nicht überschreitet und/oder ein tatsächlicher Wert der negativen Beschleunigung des beweglichen Formträgers (13) nicht unter einen unteren Grenzwert abfällt.

12. Verfahren zum Steuern einer Spritzgießmaschine umfassend:
einen beweglichen Formträger (13), der eine daran befestigte bewegliche Form (33) aufweist;
eine Antriebsquelle (21), die den beweglichen Formträger (13) bewegt;
einen Übersetzungsmechanismus (20), der einen Eingang von der Antriebsquelle (21) in einen ein vorgegebenes Verhältnis besitzenden Ausgang umsetzt und den Ausgang zum beweglichen Formträger (13) überträgt; und
eine Steuereinrichtung (90), die die Antriebsquelle (21) steuert,
wobei die Antriebsquelle (21) so gesteuert wird, dass sich der bewegliche Formträger (13) mit einer vorgegebenen Beschleunigung in einem voreingestellten Beschleunigungsmuster bewegt, wobei das Beschleunigungsmuster des beweglichen Formträgers (13) in mindestens sechs Abschnitte unterteilt ist,
- wobei im ersten Abschnitt (Z1) eine Beschleunigung des beweglichen Formträgers (13) von Zeitpunkt (t0) bis Zeitpunkt (t1) mit der Zeit erhöht wird,
- wobei im zweiten Abschnitt (Z2) die positive Beschleunigung des beweglichen Formträgers (13) vom Zeitpunkt (t1) bis zum Zeitpunkt (t2) aufrechterhalten wird und innerhalb eines zulässigen Bereichs aufrechterhalten wird,
- wobei im dritten Abschnitt (Z3) die Beschleunigung A1 des beweglichen Formträgers (13) mit der Zeit abgesenkt wird und von positiv auf negativ geändert wird,
- wobei im vierten Abschnitt (Z4) die negative Beschleunigung des beweglichen Formträgers (13) vom Zeitpunkt (t3) bis zum Zeitpunkt (t4) aufrechterhalten wird und innerhalb eines zulässigen Bereichs aufrechterhalten wird,
- wobei im fünften Abschnitt (Z5) vom Zeitpunkt (t4) bis zum Zeitpunkt (t5) und im sechsten Abschnitt (Z6) vom Zeitpunkt (t5) bis zum Zeitpunkt (t6) die Beschleunigung des beweglichen Formträgers (13) mit der Zeit erhöht wird und mit der Zeit nahe null gebracht wird, und
- wobei die Steigung dA1/dt (> 0) im sechsten Abschnitt (Z6) des Schließens der Form kleiner als die Steigung dA1/dt (> 0) im fünften Abschnitt (Z5) des Schließens der Form ist.

13. Verfahren zum Steuern einer Spritzgießmaschine umfassend:
einen beweglichen Formträger (13), der eine daran befestigte bewegliche Form (33) aufweist;
eine Antriebsquelle (21), die den beweglichen Formträger (13) bewegt;
einen Übersetzungsmechanismus (20), der einen Eingang von der Antriebsquelle (21) in einen ein vorgegebenes Verhältnis besitzenden Ausgang umsetzt und den Ausgang zum beweglichen Formträger (13) überträgt; und
eine Steuereinrichtung (90), die die Antriebsquelle (21) steuert,
wobei die Antriebsquelle (21) so gesteuert wird, dass sich der bewegliche Formträger (13) mit einer vorgegebenen Beschleunigung in einem voreingestellten Beschleunigungsmuster bewegt, wobei das Beschleunigungsmuster des beweglichen Formträgers (13) zum Zeitpunkt des Öffnens der Form in mindestens sechs Abschnitte unterteilt ist,
- wobei im ersten Abschnitt (S1) des Öffnens der Form von Zeitpunkt (t7) bis Zeitpunkt (t8) und im zweiten Abschnitt (S2) des Öffnens der Form vom Zeitpunkt (t8) bis zum Zeitpunkt (t9) die Beschleunigung des beweglichen Formträgers (13) mit der Zeit erhöht wird,
- wobei die Steigung dA1/dt (> 0) im zweiten Abschnitt (S2) des Öffnens der Form größer als die Steigung dA1/dt (> 0) im ersten Abschnitt (S1) des Öffnens der Form ist,
- wobei im dritten Abschnitt (S3) des Öffnens der Form die positive Beschleunigung des beweglichen Formträgers (13) vom Zeitpunkt (t9) bis zum Zeitpunkt (t10) aufrechterhalten wird und innerhalb eines zulässigen Bereichs aufrechterhalten wird,
- wobei im vierten Abschnitt (S4) des Öffnens der Form die Beschleunigung des beweglichen Formträgers (13) vom Zeitpunkt (t10) bis zum Zeitpunkt (t11) mit der Zeit abgesenkt wird und von positiv auf negativ geändert wird,
- wobei im fünften Abschnitt (S5) des Öffnens der Form die negative Beschleunigung des beweglichen Formträgers (13) vom Zeitpunkt (t11) bis zum Zeitpunkt (t12) aufrechterhalten wird und in einem zulässigen Bereich aufrechterhalten wird, und
- wobei im sechsten Abschnitt (S6) des Öffnens der Form die Beschleunigung des beweglichen Formträgers (13) vom Zeitpunkt (t12) bis zum Zeitpunkt (t13) mit der Zeit erhöht wird und mit der Zeit nahe null gebracht wird.

14. Verfahren zum Steuern der Spritzgießmaschine nach Anspruch 12 oder 13,
wobei ein Beschleunigungsmuster des beweglichen Formträgers (13) eingestellt ist und die Antriebsquelle (21) auf der Grundlage des eingestellten Beschleunigungsmusters gesteuert wird.

15. Verfahren zum Steuern der Spritzgießmaschine nach Anspruch 12 bis 14,
wobei die Beschleunigung des beweglichen Formträgers (13) überwacht wird und die Antriebsquelle (21) auf der Grundlage eines Überwachungsergebnisses gesteuert wird.

## Revendications

1. Une machine de moulage par injection comprenant :
une platine mobile (13) à laquelle un moule mobile (33) est attaché ;
une source d'entraînement (21) qui déplace la platine mobile (13) ;
un mécanisme de transmission (20) qui convertit une entrée provenant de la source d'entraînement (21) en une sortie ayant un rapport prédéterminé et transmet la sortie à la platine mobile (13) ; et
un contrôleur (90) qui est configuré pour commander la source d'entraînement (21),
dans laquelle le contrôleur (90) est configuré pour commander la source d'entraînement (21) de sorte que la platine mobile (13) se déplace avec une accélération prédéterminée selon un motif d'accélération établi au préalable, dans laquelle le motif d'accélération de la platine mobile (13) à l'instant de la fermeture du moule est divisé en au moins six sections,
- dans laquelle, dans la première section de fermeture de moule (Z1), une accélération de la platine mobile (13) est augmentée dans le temps d'un instant (t0) à un instant (t1),
- dans laquelle, dans la deuxième section de fermeture de moule (Z2), l'accélération positive de la platine mobile (13) est maintenue de l'instant (t1) à un instant (t2) et est maintenue dans une plage admissible,
- dans laquelle, dans la troisième section de fermeture de moule (Z3), l'accélération de la platine mobile (13) est diminuée dans le temps et est changée de positive à négative,
- dans laquelle, dans la quatrième section de fermeture de moule (Z4), l'accélération négative de la platine mobile (13) est maintenue de l'instant (t3) à un instant (t4) et est maintenue dans une plage admissible,
- dans laquelle, dans la cinquième section de fermeture de moule (Z5), de l'instant (t4) à un instant (t5), et dans la sixième section de fermeture de moule (Z6), de l'instant (t5) à un instant (t6), l'accélération de la platine mobile (13) est augmentée dans le temps et est amenée proche de zéro dans le temps, et
- dans laquelle l'inclinaison dA1/dt (> 0) dans la sixième section de fermeture de moule (Z6) est inférieure à l'inclinaison dA1/dt (> 0) dans la cinquième section de fermeture de moule (Z5).

2. Une machine de moulage par injection comprenant :
une platine mobile (13) à laquelle un moule mobile (33) est attaché ;
une source d'entraînement (21) qui déplace la platine mobile (13) ;
un mécanisme de transmission (20) qui convertit une entrée provenant de la source d'entraînement (21) en une sortie ayant un rapport prédéterminé et transmet la sortie à la platine mobile (13) ; et
un contrôleur (90) qui est configuré pour commander la source d'entraînement (21),
dans laquelle le contrôleur (90) est configuré pour commander la source d'entraînement (21) de sorte que la platine mobile (13) se déplace avec une accélération prédéterminée selon un motif d'accélération établi au préalable, dans laquelle le motif d'accélération de la platine mobile (13) à l'instant de l'ouverture du moule est divisé en au moins six sections,
- dans laquelle, dans la première section d'ouverture de moule (S1), d'un instant (t7) à un instant (t8), et dans la deuxième section d'ouverture de moule (S2), de l'instant (t8) à un instant (t9), l'accélération de la platine mobile (13) est augmentée dans le temps,
- dans laquelle l'inclinaison dA1/dt (> 0) dans la deuxième section d'ouverture de moule (S2) est supérieure à l'inclinaison dA1/dt (> 0) dans la première section d'ouverture de moule (S1),
- dans laquelle, dans la troisième section d'ouverture de moule (S3), l'accélération positive de la platine mobile (13) est maintenue de l'instant (t9) à un instant (t10) et est maintenue dans une plage admissible,
- dans laquelle, dans la quatrième section d'ouverture de moule (S4), de l'instant (t10) à un instant (t11), l'accélération de la platine mobile (13) est diminuée dans le temps et est changée de positive à négative,
- dans laquelle, dans la cinquième section d'ouverture de moule (S5), l'accélération négative de la platine mobile (13) est maintenue de l'instant (t11) à un instant (t12) et est maintenue dans une plage admissible, et
- dans laquelle, dans la sixième section d'ouverture de moule (S6), de l'instant (t12) à un instant (t13), l'accélération de la platine mobile (13) est augmentée dans le temps et est amenée proche de zéro dans le temps.

3. La machine de moulage par injection selon la revendication 1 ou 2,
dans laquelle une section où une limite supérieure et/ou une limite inférieure de l'accélération positive de la platine mobile (13) sont établies est prévue dans le motif d'accélération.

4. La machine de moulage par injection selon l'une quelconque des revendications 1 à 3,
dans laquelle une section où une limite inférieure et/ou une limite supérieure de l'accélération négative de la platine mobile (13) sont établies est prévue dans le motif d'accélération.

5. La machine de moulage par injection selon l'une quelconque des revendications 1 à 4,
dans laquelle le contrôleur (90) est configuré pour commander la source d'entraînement (21) sur la base d'une valeur réelle et d'une valeur établie de la vitesse de la source d'entraînement (21), et
dans laquelle un motif de vitesse de la source d'entraînement (21) établie au préalable correspond au motif d'accélération de la platine mobile (13).

6. La machine de moulage par injection selon la revendication 5,
dans laquelle le contrôleur (90) est configuré pour recevoir le motif d'accélération de la platine mobile (13) à partir de l'extérieur, et est configuré pour créer le motif de vitesse de la source d'entraînement (21) correspondant au motif d'accélération de la platine mobile (13).

7. La machine de moulage par injection selon la revendication 5,
dans laquelle le contrôleur (90) est configuré pour recevoir le motif de vitesse de la source d'entraînement (21) correspondant au motif d'accélération de la platine mobile (13) à partir de l'extérieur.

8. La machine de moulage par injection selon l'une quelconque des revendications 1 à 7, comprenant en outre :
un accéléromètre (19) qui est configuré pour détecter la valeur réelle de l'accélération de la platine mobile (13),
dans laquelle le contrôleur (90) est configuré pour commander la source d'entraînement (21) sur la base de la valeur réelle et de la valeur établie de l'accélération de la platine mobile (13).

9. La machine de moulage par injection selon l'une quelconque des revendications 1 à 8, comprenant en outre :
un dispositif d'entrée qui reçoit une opération d'entrée d'un utilisateur,
dans laquelle le contrôleur (90) est configuré pour sélectionner un motif d'accélération conformément à l'opération d'entrée dans le dispositif d'entrée parmi une pluralité de motifs d'accélération établis au préalable, et est configuré pour commander la source d'entraînement de sorte que la platine mobile (13) se déplace selon le motif d'accélération sélectionné.

10. La machine de moulage par injection selon la revendication 9, dans laquelle trois types de motifs d'accélération établis au préalable pour un mode à faible vibration, un mode à grande vitesse, et un mode intermédiaire sont préparés à l'avance.

11. La machine de moulage par injection selon l'une quelconque des revendications 1 à 10, comprenant en outre :
un accéléromètre (19) qui est configuré pour détecter la valeur réelle de l'accélération de la platine mobile (13),
dans laquelle le contrôleur (90) est configuré pour commander la source d'entraînement (21) de sorte qu'une valeur réelle de l'accélération positive de la platine mobile (13) ne dépasse pas une limite supérieure et/ou qu'une valeur réelle de l'accélération négative de la platine mobile (13) ne tombe pas au-dessous d'une limite inférieure.

12. Une méthode pour commander une machine de moulage par injection comprenant :
une platine mobile (13) à laquelle un moule mobile (33) est attaché ;
une source d'entraînement (21) qui déplace la platine mobile (13) ;
un mécanisme de transmission (20) qui convertit une entrée provenant la source d'entraînement (21) en une sortie ayant un rapport prédéterminé et transmet la sortie à la platine mobile (13) ; et
un contrôleur (90) qui commande la source d'entraînement (21),
dans laquelle la source d'entraînement (21) est commandée de sorte que la platine mobile (13) se déplace avec une accélération prédéterminée selon un motif d'accélération établi au préalable, dans laquelle le motif d'accélération de la platine mobile (13) est divisé en six sections,
- dans laquelle, dans la première section (Z1), une accélération de la platine mobile (13) est augmentée dans le temps d'un instant (t0) à un instant (t1),
- dans laquelle, dans la deuxième section (Z2), l'accélération positive de la platine mobile (13) est maintenue de l'instant (t1) à un instant (t2) et est maintenue dans une plage admissible,
- dans laquelle, dans la troisième section (Z3), l'accélération A1 de la platine mobile (13) est diminuée dans le temps et est changée de positive à négative,
- dans laquelle, dans la quatrième section (Z4), l'accélération négative de la platine mobile (13) est maintenue de l'instant (t3) à un instant (t4) et est maintenue dans une plage admissible,
- dans laquelle, dans la cinquième section (Z5), de l'instant (t4) à un instant (t5), et dans la sixième section (Z6), de l'instant (t5) à un instant (t6), l'accélération de la platine mobile (13) est augmentée dans le temps et est amenée proche de zéro dans le temps, et
- dans laquelle l'inclinaison dA1/dt (> 0) dans la sixième section de fermeture de moule (Z6) est inférieure à l'inclinaison dA1/dt (> 0) dans la cinquième section de fermeture de moule (Z5).

13. Une méthode pour commander une machine de moulage par injection comprenant :
une platine mobile (13) à laquelle un moule mobile (33) est attaché ;
une source d'entraînement (21) qui déplace la platine mobile (13) ;
un mécanisme de transmission (20) qui convertit une entrée provenant de la source d'entraînement (21) en une sortie ayant un rapport prédéterminé et transmet la sortie à la platine mobile (13) ; et
un contrôleur (90) qui commande la source d'entraînement (21),
dans laquelle la source d'entraînement (21) est commandée de sorte que la platine mobile (13) se déplace avec une accélération prédéterminée selon un motif d'accélération établi au préalable, dans lequel le motif d'accélération de la platine mobile (13) à l'instant de l'ouverture du moule est divisé en au moins six sections,
- dans laquelle, dans la première section d'ouverture de moule (S1), d'un instant (t7) à un instant (t8), et dans la deuxième section d'ouverture de moule (S2), de l'instant (t8) à un instant (t9), l'accélération de la platine mobile (13) est augmentée dans le temps,
- dans laquelle l'inclinaison dA1/dt (> 0) dans la deuxième section d'ouverture de moule (S2) est supérieure à l'inclinaison dA1/dt (> 0) dans la première section d'ouverture de moule (S1),
- dans laquelle, dans la troisième section d'ouverture de moule (S3), l'accélération positive de la platine mobile (13) est maintenue de l'instant (t9) à un instant (t10) et est maintenue dans une plage admissible,
- dans laquelle, dans la quatrième section d'ouverture de moule (S4), de l'instant (t10) à un instant (t11), l'accélération de la platine mobile (13) est diminuée dans le temps et est changée de positive à négative,
- dans laquelle, dans la cinquième section d'ouverture de moule (S5), l'accélération négative de la platine mobile (13) est maintenue de l'instant (t11) à un instant (t12) et est maintenue dans une plage admissible, et
- dans laquelle, dans la sixième section d'ouverture de moule (S6), de l'instant (t12) à un instant (t13), l'accélération de la platine mobile (13) est augmentée dans le temps et est amenée proche de zéro dans le temps.

14. La méthode pour commander la machine de moulage par injection selon la revendication 12 ou 13,
dans laquelle un motif d'accélération de la platine mobile (13) est établi, et la source d'entraînement (21) est commandée sur la base du motif d'accélération établi.

15. La méthode pour commander la machine de moulage par injection selon les revendications 12 à 14,
dans laquelle l'accélération de la platine mobile (13) est surveillée, et la source d'entraînement (21) est commandée sur la base d'un résultat de surveillance.
